# EUROPÄISCHE PATENTSCHRIFT

(11) **EP 1 604 561 B1**
(45) Veröffentlichungstag und Bekanntmachung des Hinweises auf die Patenterteilung: **23.05.2007**
(21) Anmeldenummer: 05104648.0
(22) Anmeldetag: 31.05.2005
(51) Int. Cl.: A01D 57/02

(54) **Haspel für eine Erntegutbergungseinrichtung**
Reel for a harvesting machine
Rabatteur pour machine de récolte

(30) Priorität: 12.06.2004 DE 102004028550
(43) Veröffentlichungstag der Anmeldung: 14.12.2005
(73) Patentinhaber: DEERE & COMPANY, Moline, Illinois 61265-8098 (US)
(72) Erfinder: Lanzinger, Bernhard, 66440, Böckweiler (DE)
(74) Vertreter: Holst, Sönke

(56) Entgegenhaltungen:
- DE-B3-3102004 001 38
- US-A- 3 145 520
- US-A- 3 902 305
- US-A1- 2001 009 093

## Beschreibung

Die Erfindung betrifft eine Haspel für eine Erntegutbergungseinrichtung, mit sich über die Breite der Haspel erstreckenden Zinkenträgern, die Zinken zur Förderung von Erntegut tragen, und mit Streben zur Abstützung der Zinkenträger, die durch Strebenhalterungen am Zinkenträger befestigt sind, wobei sich die Zinkenträger aus kürzeren Segmenten zusammensetzen, die sich jeweils zwischen den Streben erstrecken und durch Befestigungselemente aneinander fixiert sind, und die Befestigungselemente zwischen benachbarten Segmenten kreiszylindrische Lagerflächen für die dort angeordnete Strebenhalterung bilden und die Strebenhalterung gegen axiale Verschiebung entlang des Zinkenträgers sichern.

Haspeln finden an Erntegutbergungseinrichtungen, insbesondere an Schneidwerken, Verwendung, um stehendes Erntegut einem Messerbalken und einer Querfördereinrichtung zuzuführen. Sie weisen eine Anzahl an Zinkenträgern (meistens fünf oder sechs) auf, die sich über die Breite der Erntegutbergungseinrichtung erstrecken.

In der US 3 145 520 A ist eine derartige Haspel beschrieben, die Zinkenträgerrohre mit daran befestigten Zinken aufweist, die endseitig und an über die Breite der Haspel verteilten Tragsternen gelagert sind. Die Zinkenträgerrohre sind drehbar an den Tragsternen abgestützt und werden durch Exzentertriebe verschwenkt, um den Zinken die gewünschte Orientierung zu verleihen. Auf der Mittelachse der Haspel erstreckt sich ein Zentralrohr, das der Haspel die nötige Stabilität verleihen soll. Als nachteilig ist dabei anzusehen, dass das Zentralrohr das Gewicht der Haspel vergrößert und die Sicht des Bedieners auf Elemente des Schneidwerks, insbesondere den Messerbalken und davor liegende Bereiche, einschränkt.

Die US 3 902 305 A beschreibt ein Mähgerät mit einem flexiblen Schneidriemen, der zum Abschneiden des Ernteguts dient. Darüber befindet sich eine Haspel, die das Erntegut dem Schneidriemen zuführen soll und sich aus endseitigen Tragsternen und sich dazwischen erstreckenden Zinkenträgerrohren zusammensetzt. Da die Arbeitsbreite des Mähgeräts relativ gering ist, konnte auf ein Zentralrohr verzichtet werden. Diese Haspel würde sich wegen fehlender Abstützung der Zinkenträgerrohre zwischen ihren Enden aus Stabilitätsgründen nicht für eine größere Arbeitsbreite eignen.

Bei mit einem mittigen Trägerrohr ausgestatteten Haspeln, bei denen die Zinkenträger zwischen ihren Enden durch mit dem Trägerrohr verbundenen Streben abgestützt werden (s. US 3 145 520 A), erübrigen sich besondere Maßnahmen zur Fixierung der Streben an den Zinkenträgern in axialer Richtung, da die Streben am Trägerrohr befestigt sind. Würde das Trägerrohr entfallen, wäre bei einer Haspel, wie sie in der US 3 145 520 A beschrieben ist, eine axiale Führung der Streben nicht gewährleistet.

Die US 6 397 57B beschreibt einen Haspelzusammenbau, bei dem die Zinkenträger in axialer Richtung in rohrförmige Segmente unterteilt sind. Die Segmente werden durch massive Verbindungswellen aneinander fixiert, die in die Enden der Segmente eingeschoben und dort durch Bolzen oder Schrauben befestigt werden. Die Verbindungswellen haben einen Abschnitt mit reduziertem Durchmesser, der zur Aufnahme eines Lagers dient, das an den äußeren Enden der Arme auf den mit dem zentralen Trägerrohr verbundenen Tragsternen der Haspel befestigt ist. Auch hier ist ein mittiges Trägerrohr vorgesehen, das wegen hohen Gewichts und beschränktem Sichtfeld nachteilig ist.

In der nachveröffentlichten DE 10 2004 001 383 A wird eine Haspel ohne mittleres Trägerrohr beschrieben. Die Zinkenträger werden durch Streben untereinander verbunden, die ein tragendes Fachwerk bilden. Die Streben bilden ein Sechseck, in dessen Eckpunkten die Zinkenträger drehbar gelagert sind.

Die ebenfalls nachveröffentlichte DE 10 2004 022 196 A schlägt vor, die Streben durch Halterungen am Zinkenträger zu lagern, welche sich aus Lagerhälften zusammensetzen. Die Lagerhälften werden durch die auf endseitige Strebenhalterungsabschnitte der Lagerhälften aufgeschobene Strebe aneinander fixiert. In axialer Richtung werden die Lagerhälften durch ringförmige Halter fixiert, die jeweils gemeinsam mit einem benachbarten Zinken am Zinkenträger befestigt sind.

Die der Erfindung zu Grunde liegende Aufgabe wird darin gesehen, eine hinreichend stabile, jedoch leichte Haspel bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Haspel aus einem Fachwerk aufzubauen, das sich aus den Zinkenträgern und Streben zusammensetzt, die ausschließlich jeweils benachbarte Zinkenträger verbinden, jedoch keine Verbindung mit einem mittigen Trägerrohr bilden. Da dieses Fachwerk eine hinreichende Stabilität bietet, kann im Innenraum zwischen den Zinkenträgern auf tragende Elemente verzichtet werden, die sich über die Länge der Haspel erstrecken. Die Haspel ist somit relativ leicht und der Bediener hat eine gute Sicht auf die Erntegutbergungseinrichtung.

Durch das entfallende mittige Trägerrohr besteht ein Bedarf nach einer axialen Fixierung der Strebenhalterungen an den Zinkenträgern. Sie wird erfindungsgemäß durch die Befestigungselemente erzielt, die zwei Aufgaben haben: (1) sie fixieren die kürzeren Segmente der Zinkenträger aneinander, und (2) sie bilden eine radiale und axiale Lagerung für die Strebenhalterung.

Auf diese Weise erreicht man einen einfachen und stabilen Aufbau der Haspel.

In einer bevorzugten Ausführungsform erstreckt sich jede Strebe zwischen einer Strebenhalterung und einer anderen Strebe, insbesondere deren ihrer Strebenhalterung zugewandten Ende. Es wäre aber auch denkbar, dass sich die Streben zwischen jeweils zwei Strebenhalterungen erstrecken, die eine oder zwei Streben aufnehmen.

Die axiale Führung der Strebenhalterung in Längsrichtung der Zinkenträger kann durch sich radial zur Längsachse des Befestigungselements, die koaxial zur Achse der Segmente der Zinkenträger verläuft, erstreckende Flächen erfolgen. Es wäre denkbar, zur Bereitstellung dieser Flächen eine entsprechende Einbuchtung im Befestigungselement vorzusehen. Bevorzugt ist aber, die Flächen durch Ringe zu realisieren, die am Befestigungselement angebracht werden. Dabei besteht die Möglichkeit, ein preiswert herstellbares, kreiszylindrisches Befestigungselement zu verwenden. Alternativ wäre es auch möglich, das Befestigungselement mit einer kreiszylindrischen Außenfläche auszustatten und als Flächen zur axialen Sicherung der Strebenhalterung die Zinkenträger zu nutzen.

In den Zeichnungen ist ein nachfolgend näher beschriebenes Ausführungsbeispiel der Erfindung dargestellt. Es zeigt:
- Fig. 1: einen Mähdrescher mit einem Erntegutbergungsvorsatz, der eine Haspel aufweist,
- Fig. 2: eine perspektivische Ansicht einer erfindungsgemäßen Haspel, und
- Fig. 3: eine perspektivische Ansicht zweier Zinkenträgerabschnitte mit einem sie aneinander fixierenden Verbindungselement und einer daran angebrachten Lagerhälfte zur Anbringung eines Strebenrings.

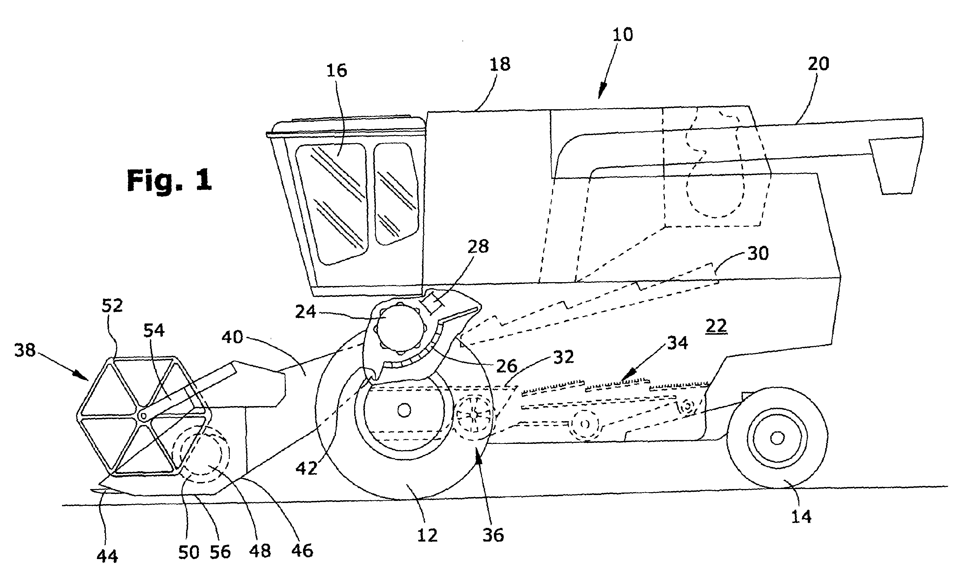

Ein in der Figur 1 gezeigter Mähdrescher 10 ist auf vorderen angetriebenen und rückwärtigen lenkbaren Rädern 12 bzw. 14 getragen und weist eine Fahrerkabine 16 auf, von der aus er von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Strohschüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Strohschüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Einzugskanal 40 in Form eines Schrägförderers und eine Steinfangmulde 42 der Dreschtrommel 24 zugeführt, nachdem es von einer Erntegutbergungseinrichtung 38 vom Boden aufgenommen worden ist.

Die Erntegutbergungseinrichtung 38 ist in der dargestellten Ausführungsform ein Schneidwerk, an dessen Vorderseite sich ein sich hin- und herbewegender Messerbalken 44 befindet. Ein Rahmen 46 der Erntegutbergungseinrichtung 38 trägt außerdem einen Schneckenförderer 48 mit um ein mittiges Rohr umlaufenden Windungen 50. Oberhalb und vor dem Schneckenförderer 48 befindet sich eine Haspel 52, die dazu dient, stehendes Gut dem Messerbalken 44 und dem Schneckenförderer 48 zuzuführen. Die Haspel 52 ist an ihren beiden Enden durch Haspelträgerarme 54 mit dem Rahmen 46 verbunden und wird durch einen mechanischen oder hydraulischen Antrieb um ihre Längsachse angetrieben, so dass sie sich in Figur 1 im Gegenuhrzeigersinn dreht.

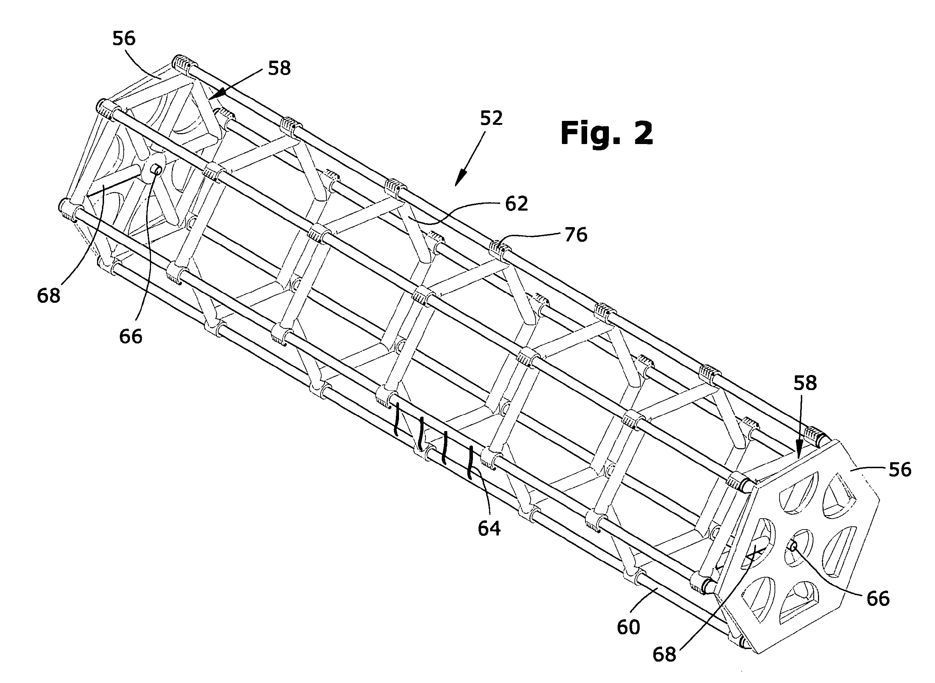

Die Figur 2 zeigt eine perspektivische Ansicht der Haspel 52. Die Haspel 52 setzt sich aus zwei endseitigen Tragsternen 58, sechs Zinkenträgern 60 aus kreiszylindrischen Rohren mit über ihre Länge konstantem Außenquerschnitt, in Sechsecken angeordneten Streben 62 und an den Zinkenträgern 60 befestigten Zinken 64 zusammen. Die Tragsterne 58 sind an beiden Enden der Haspel 52 angeordnet und weisen jeweils sechs von einer Nabe 66 sich radial nach außen erstreckende Arme 68 auf. Zwischen den äußeren Enden der Arme 68 der Tragsterne 58 erstrecken sich die Zinkenträger 60 über die gesamte Breite der Haspel 52. Sie setzen sich aus Einzelelementen zusammen, die jeweils einen Teil der Länge umfassen und mechanisch aneinander befestigt sind. Die Zinkenträger 60 sind drehbar an den Armen 68 gelagert und auch gegenüber den Streben 62 drehbar.

An der rechten Seite der Haspel 52 ist neben dem Tragstern 58 eine Steuerscheibe 56 angeordnet, deren Drehachse exzentrisch zur Achse der Naben 66 der Tragsterne 58 angeordnet ist. Die Zinkenträger 60 sind durch Steuerhebel, die als Schwenkantriebe dienen, mit der Steuerscheibe verbunden. Beim Betrieb, in dem die Naben 66 und mit ihr die Arme 68 des Tragsterns 58 durch einen Motor in Drehung versetzt werden, führen die Zinkenträger 60 somit eine Drehbewegung gegenüber den Armen 68 durch, so dass die Zinken 64 über den ganzen Drehbereich der Haspel 52 etwa nach unten orientiert sind, wie in der Figur 2 dargestellt. Dadurch erreicht man eine gute Zuführung des Ernteguts zu dem Messerbalken 44 und zum Schneckenförderer 48.

Die Haspel 52 ist im Innenraum zwischen den Zinkenträgern 60 frei von sich über die Länge der Haspel erstreckenden, tragenden Elementen. Die Naben 66 der Tragsterne 58 sind daher nicht durch ein sich über die Breite der Haspel 52 erstreckendes Trägerrohr oder ähnliche sich über die Breite erstreckende, tragende Halteelemente, beispielsweise dünne Streben o. ä., verbunden. Der sich ergebende freie Raum hat den Vorteil, dass die erfindungsgemäße Haspel 52 leichter als mit Trägerrohr versehene Ausführungsformen ist, und dass die Sicht auf die Erntegutbergungseinrichtung 38 nicht durch ein Trägerrohr verdeckt wird. Der Bediener in der Fahrerkabine 16 hat somit eine gute Sicht auf den Messerbalken 44 und den Bereich vor der Erntegutbergungseinrichtung 38.

Um der Haspel 52, die eine Breite von 6 m oder mehr haben kann (z. B. 9 m), die erforderliche Stabilität zu verleihen, sind die Streben 62 vorgesehen. Die Streben 62 bilden sechseckige Ringe. Außer den Streben 62 und den Tragsternen 58 sind keine weiteren die Zinkenträger 60 stützenden Elemente vorhanden. Die Streben 62 und die Zinkenträger 60 bilden ein Fachwerk. Die Verbindung zwischen den Streben 62 und den Zinkenträgern 60 ermöglicht eine Drehung der Zinkenträger 60 um ihre Längsachse, während alle anderen Freiheitsgrade verhindert werden. Über die Breite der Haspel 52 sind in geeigneten Abständen Streben 62 verteilt.

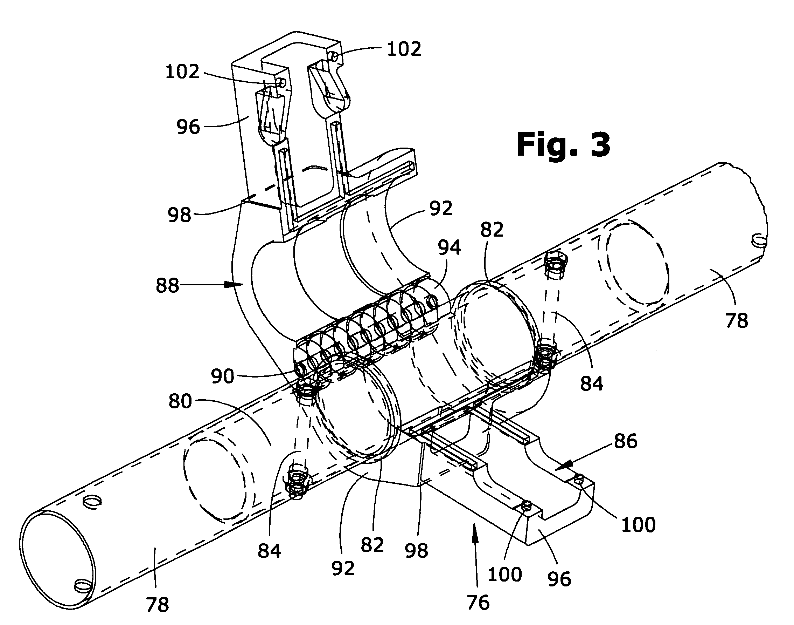

Anhand der Figuren 2 und 3 ist erkennbar, dass jede der Streben 62 an einem ersten Ende durch eine endseitige Strebenhalterung 76 mit einem Zinkenträger 60 verbunden ist. An ihrem zweiten Ende ist die betreffende Strebe mit der nächsten Strebe 62 starr verbunden (insbesondere verschweißt), in unmittelbarer Nähe zum ersten Ende der nächsten Strebe 62. An diesem Ende ist die nächste Strebe 62 wiederum durch eine Strebenhalterung 76 am Zinkenträger 60 gelagert. Die Strebenhalterungen 76 ermöglichen die beschriebene Drehung der Zinkenträger 60.

Gemäß der Figur 3 setzen sich die Zinkenträger 60 aus kürzeren Segmenten 78 zusammen, die sich jeweils zwischen den aus den Streben 62 gebildeten Ringen bzw. den Tragsternen 58 erstrecken. Die Segmente 78 sind kreiszylindrische Rohre und werden durch Befestigungselemente 80 aneinander fixiert. Die Befestigungselemente 80 sind ebenfalls kreiszylindrische Rohre und weisen einen Außendurchmesser auf, der dem Innendurchmesser der Segmente 78 der Zinkenträger 60 entspricht. Auf die Befestigungselemente 80 sind je zwei Ringe 82 aufgesetzt und fixiert.

Im montierten Zustand erstrecken sich die außerhalb der Ringe 82 liegenden Bereiche der Befestigungselemente 80 in den Innenraum der Segmente 78 hinein, so dass die Segmente 80 an den Außenflächen der Ringe 82 anliegen. Die Befestigungselemente 80 und die Segmente 78 werden durch Bolzen oder Schrauben 84, die sich jeweils durch radiale Bohrungen in den Segmenten 78 und den Befestigungselementen 80 erstrecken, aneinander fixiert.

Zwischen den Ringen 82 bilden die Befestigungselemente 80 kreiszylindrische Lagerflächen für die dort angeordnete Strebenhalterung 76. Die Ringe 82 fixieren die Strebenhalterungen 76 in Längsrichtung der Zinkenträger 60.

Eine Strebenhalterung 76 ist in der Figur 3 dargestellt. Jede Strebenhalterung 76 umfasst eine erste Lagerhälfte 86 und eine zweite Lagerhälfte 88, die im montierten Zustand gemeinsam das Ende der Strebe 62 haltern. Die zwei Lagerhälften 86, 88 sind durch einen Scharnierstift 90 aneinander befestigt.

Jede Lagerhälfte 86, 88 umfasst einen Lagerabschnitt 92, der eine innere halbkreisförmige Lageroberfläche und gegenüberliegende parallele Enden aufweist. An einer Seite des Lagerabschnitts 92 erstrecken sich fünf Scharnieransätze 94 radial von der halbkreisförmigen Lageroberfläche fort. Bohrungen in den Scharnieransätzen 94 sind zueinander koaxial und parallel zur Längsachse der Lageroberfläche. Durch sie erstreckt sich der Scharnierstift 90. An der gegenüberliegenden Seite des Lagerabschnitts 92 ist ein sich radial zur halbkreisförmigen Lageroberfläche erstreckender Strebenhalterungsabschnitt 96. Der Strebenhalterungsabschnitt 96 weist einen rechteckigen Flansch 98 auf. Jede Lagerhälfte 86, 88 ist vorzugsweise aus einem harten, stoßfesten Material, welches auch ohne Schmierung eine lange Lebensdauer der Lagerung gewährleistet. Ein Polyamid, wie Zytel ST 801, wurde erfolgreich verwendet.

Der Versatz der Scharnieransätze 94 und die Anordnung der Bohrungen für den Scharnierstift 90 sind derart gestaltet, dass die Lageroberflächen sich gegenüberliegen und einander zugewandt sind, wenn jeweils zwei Lagerhälften 86, 88 zusammengesetzt werden, wobei die beiden Lagerhälften 86, 88 zusammenpassen und der Scharnierstift 90 in die Bohrung eingesetzt werden kann, so dass die Lagerhälften 86, 88 durch das - aus Scharnieransätzen 94 und Scharnierstift 90 gebildete - Scharnier drehbar aneinander befestigt sind, und die zusammengefügten Lageroberflächen eine näherungsweise zylindrische Öffnung für das Befestigungselement 80 definieren. Es ist denkbar, andere Formen der Kopplung als den Scharnierstift 90 zu verwenden, um die Lagerhälften 86, 88 schwenkbar aneinander zu koppeln. So wäre denkbar, die zwei Lagerhälften 86, 88 als einzelne Komponente mit einem einteiligen Scharnier zu gießen.

Das aufklappbare Scharnier der zwei Lagerhälften 86, 88 kann geöffnet, auf dem Befestigungselement 80 positioniert und geschlossen werden. Stifte 100 am Strebenhalterungsabschnitt 96 der einen Lagerhälfte 86 dringen dann in komplementäre Öffnungen 102 im Strebenhalterungsabschnitt 96 der anderen Lagerhälfte 88 ein, um die Strebenhalterungsabschnitte 96 aneinander zu sichern.

Wenn die Lagerhälften 86, 88 zusammengeschwenkt werden, bilden die Strebenhalterungsabschnitte 96 einen zylindrischen Sockel, den das erste Ende der hohlen, mit rechteckigem Querschnitt ausgestatteten Strebe 62 umschließt. Das erste Ende liegt am Flansch 98 an. Dadurch, dass die Strebe 62 die Strebenhalterungsabschnitte 96 umschließt, werden die Lagerhälften 86, 88 aneinander fixiert. Die benachbarten, durch die Strebe 62 untereinander verbundenen Zinkenträger 60 verhindern wiederum, dass die Strebe 62 von den Strebenhalterungsabschnitten 96 abrutscht. Vorzugsweise ist zusätzlich eine weitere Befestigung der Strebenhalterungsabschnitte 96 an der Strebe 62 vorgesehen, beispielsweise durch einen Stift, der geeignete Bohrungen in der Strebe 62 und in den Strebenhalterungsabschnitten 96 durchdringt (nicht dargestellt), oder ein flexibles Element in einem oder beiden der Strebenhalterungsabschnitte 96, das nach außen vorgespannt ist und im montierten Zustand an der Seitenwand einer Öffnung in der Strebe 62 angeordnet ist.

Der Innen- und Außenquerschnitt der Strebe 62 ist rechteckig oder quadratisch. Dementsprechend ist auch der Querschnitt der Strebenhalterungsabschnitte 96 rechteckig. Dadurch vermeidet man unerwünschte Verwindungen oder Drehbewegungen zwischen der Strebenhalterung 76 und der Strebe 62.

Anhand der Figuren 2 und 3 ist erkennbar, dass die Ausdehnung der Strebenhalterung 76 in axialer Richtung des Zinkenträgers 60 wesentlich größer als die Abmessung der Strebe 62 in dieser Richtung ist. Dadurch erhält man einen relativ großen Hebelarm für die Abstützung des Zinkenträgers 60 durch die Streben 62, was Verwindungen des Zinkenträgers 60 oder der ganzen Haspel 52 zu vermeiden hilft. Durch diese relativ große axiale Abmessung der Strebenhalterung 76 kann jedoch eine Anbringungsmöglichkeit für einen Zinken 64 entfallen. Um dadurch entstehende Förderprobleme zu vermeiden, sind die Strebenhalterungsabschnitte 96 der Strebenhalterungen 76 nicht (bezüglich der axialen Richtung der Zinkenträger 60) mittig an den Strebenhalterungen 76 angeordnet, sondern einem axialen Ende der Strebenhalterung 76 benachbart positioniert. Durch die dargestellte alternierende Ausrichtung der Strebenhalterungen 76, bei der in Drehrichtung der Haspel 52 aufeinander folgende Strebenhalterungsabschnitte 96 jeweils abwechselnd an der linken und rechten Seite der Strebenhalterung 76 positioniert sind (s. Figur 2) erreicht man, dass - links und rechts alternierend - nur jeder zweite der Strebenhalterung 76 benachbarte Zinken 64 entfällt.

## Patentansprüche

1. Haspel (52) für eine Erntegutbergungseinrichtung (38), mit sich über die Breite der Haspel (52) erstreckenden Zinkenträgern (60), die Zinken (64) zur Förderung von Erntegut tragen, und mit Streben (62) zur Abstützung der Zinkenträger (60), die durch Strebenhalterungen (76) am Zinkenträger (60) befestigt sind, wobei sich die Zinkenträger (60) aus kürzeren Segmenten (78) zusammensetzen, die sich jeweils zwischen den Streben (62) erstrecken und durch Befestigungselemente (80) aneinander fixiert sind, und die Befestigungselemente (80) zwischen benachbarten Segmenten (78) kreiszylindrische Lagerflächen für die dort angeordnete Strebenhalterung (76) bilden und die Strebenhalterung (76) gegen axiale Verschiebung entlang des Zinkenträgers (60) sichern, **dadurch gekennzeichnet, dass** die Streben (62) nur benachbarte Zinkenträger (60) untereinander verbinden.

2. Haspel (52) nach Anspruch 1, **dadurch gekennzeichnet, dass** die Streben (62) jeweils an einem ersten Ende durch eine Strebenhalterung (76) mit einem Befestigungselement (80) und am zweiten Ende mit einer anderen Strebe (62) verbunden sind.

3. Haspel (52) nach Anspruch 2, **dadurch gekennzeichnet, dass** die Streben (62) am zweiten Ende jeweils in unmittelbarer Nähe zum ersten Ende der anderen Strebe (62) befestigt sind.

4. Haspel (52) nach einem der Ansprüche 1 bis 3, **dadurch gekennzeichnet, dass** das Befestigungselement (80) beidseits der kreiszylindrischen Lagerflächen für die dort angeordnete Strebenhalterung (76) sich radial nach außen erstreckende Flächen aufweist.

5. Haspel (52) nach Anspruch 4, **dadurch gekennzeichnet, dass** die sich radial nach außen erstreckende Flächen durch am Befestigungselement (80) angebrachte Ringe (82) gebildet werden.

6. Haspel (52) nach einem der Ansprüche 1 bis 5, **dadurch gekennzeichnet, dass** die Abmessung der Strebenhalterung (76) in axialer Richtung der Zinkenträger (60) größer ist als die Abmessung der Strebe (62) in dieser Richtung.

7. Haspel (52) nach Anspruch 6, **dadurch gekennzeichnet, dass** die Strebenhalterung (76) einen Strebenhalterungsabschnitt (96) hat, der einem axialen Ende der Strebenhalterung (76) benachbart angeordnet ist, und dass die Strebenhalterungsabschnitte (96) in Drehrichtung der Haspel (52) aufeinander folgender Strebenhalterungen (76) an alternierenden Seiten der Strebenhalterungen (76) positioniert sind, um an den nicht durch die Strebenhalterung (76) belegten Bereichen der Zinkenträger (60) Zinken (64) anbringen zu können.

8. Erntebergungseinrichtung (38) mit einer Haspel (52) nach einem der vorhergehenden Ansprüche.

## Claims

1. A reel (52) for a crop harvesting appliance (38), with tine carriers (60) extending over the width of the reel (52) and carrying tines (64) for feeding crop, and with links (62) for supporting the tine carriers (60) fixed to the tine carriers (60) by link holders (76), wherein the tine carriers (60) are composed of short segments (78) which extend in each case between the links (62) and are fixed to one another by fixing elements (80), and the fixing elements (80) between adjacent segments (78) form circular cylindrical bearing surfaces for the link holder (76) arranged there and secure the link holder (76) against axial displacement along the tine carrier (60), **characterized in that** the links (62) only connect adjacent tine carriers (60) to one another.

2. A reel (52) according to claim 1, **characterized in that** the links (62) are each connected at a first end by a link holder (76) to a fixing element (80) and at the second end to another link (62).

3. A reel (52) according to claim 2, **characterized in that** the links (62) are fixed at the second end in the immediate vicinity of the first end of the other link (62) in each case.

4. A reel (52) according to any of claims 1 to 3, **characterized in that** the fixing element (80) has radially outwardly extending surfaces on both sides of the circularly cylindrical bearing surfaces for the link holder (76) arranged there.

5. A reel (52) according to claim 4, **characterized in that** the radially outwardly extending surfaces are formed by rings (82) fitted on the fixing element (80).

6. A reel (52) according to any of claims 1 to 5, **characterized in that** the dimension of the link holder (76) in the axial direction of the tine carriers (60) is greater than the dimension of the link (62) in this direction.

7. A reel (52) according to claim 6, **characterized in that** the link holder (76) has a link holder section (96) which is arranged adjacent an axial end of the link holder (76), and **in that** the link holder sections (96) following one another in the direction of rotation of the reel (52) are positioned on alternate sides of the link holders (76) so as to be able to fit tines (64) on the regions of the tine carriers (60) not occupied by the link holder (76).

8. A harvesting appliance (38) with a reel (52) according to any of the preceding claims.

## Revendications

1. Rabatteur (52) pour un dispositif de récolte (38), comportant des supports de dents (60), qui s'étendent sur toute la largeur du rabatteur (52) et qui portent des dents (64) destinées à transporter les végétaux, et comportant des entretoises (62) pour supporter les supports de dents (60), lesquelles sont fixées contre les supports de dents (60) au moyen de fixations d'entretoise (76), les supports de dents (60) étant formés par des segments (78) plus courts, qui s'étendent respectivement entre les entretoises (62) et sont fixés les uns aux autres par des éléments de fixation (80), et les éléments de fixation (80) entre des segments (78) voisins forment des surfaces d'appui cylindriques pour les fixations d'entretoise (76) montées à cet emplacement et bloquent la fixation d'entretoise (76) contre tout mouvement axial le long du support de dents (60), **caractérisé en ce que** les entretoises (62) relient uniquement entre eux des supports de dents (60) voisins.

2. Rabatteur (52) selon la revendication 1, **caractérisé en ce que** les entretoises (62) sont reliées respectivement par une première extrémité, au moyen d'une fixation d'entretoise (76) avec un élément de fixation (80) et par la deuxième extrémité avec une autre entretoise (62).

3. Rabatteur (52) selon la revendication 2, **caractérisé en ce que** les entretoises (62) sont fixées par leur deuxième extrémité respectivement à proximité immédiate de la première extrémité de l'autre entretoise (62).

4. Rabatteur (52) selon l'une quelconque des revendications 1 à 3, **caractérisé en ce que**, de part et d'autre de ses surfaces d'appui cylindriques, l'élément de fixation (80) comporte, pour la fixation d'entretoise (76) qui est montée à cet emplacement, des surfaces qui s'étendent dans le sens radial vers l'extérieur.

5. Rabatteur (52) selon la revendication 4, **caractérisé en ce que** les surfaces qui s'étendent dans le sens radial vers l'extérieur sont formées par des bagues (82) montées sur l'élément de fixation (80).

6. Rabatteur (52) selon l'une quelconque des revendications 1 à 5, **caractérisé en ce que** la dimension de la fixation d'entretoise (76) dans la direction axiale des supports de dents (60) est supérieure à la dimension des entretoises (62) dans cette direction.

7. Rabatteur (52) selon la revendication 6, **caractérisé en ce que** la fixation d'entretoise (76) comporte un tronçon de fixation (96) qui est adjacent à une extrémité axiale de la fixation d'entretoise (76), et **en ce que** les tronçons de fixation (96) de fixations d'entretoise (76) successives dans le sens de rotation du rabatteur (52) sont positionnés sur des côtés alternés des fixations d'entretoise (76), afin de pouvoir disposer des dents (64) sur les zones des supports de dents (60) non occupées par la fixation d'entretoise (76).

8. Dispositif de récolte (38) comportant un rabatteur (52) selon l'une quelconque des revendications précédentes.
